# EUROPÄISCHE PATENTSCHRIFT

(11) **EP 2 352 948 B1**
(45) Veröffentlichungstag und Bekanntmachung des Hinweises auf die Patenterteilung: **04.05.2016**
(21) Anmeldenummer: 09753034.9
(22) Anmeldetag: 06.11.2009
(51) Int. Cl.: F16P 3/08

(54) **SICHERHEITSSCHALTER ZUM ERZEUGEN EINES ANLAGENFREIGABESIGNALS IN ABHÄNGIGKEIT VON DER POSITION EINER BEWEGLICHEN SCHUTZTÜR**
SAFETY SWITCH FOR CREATING A SYSTEM RELEASE SIGNAL IN DEPENDENCE ON THE POSITION OF A MOVABLE GUARD DOOR
COMMUTATEUR DE SÉCURITÉ POUR PRODUIRE UN SIGNAL DE LIBÉRATION DE L'INSTALLATION EN FONCTION DE LA POSITION D'UNE PORTE DE PROTECTION MOBILE

(30) Priorität: 25.11.2008 DE 102008060004
(43) Veröffentlichungstag der Anmeldung: 10.08.2011
(73) Patentinhaber: Pilz GmbH & Co. KG, 73760 Ostfildern (DE)
(72) Erfinder: LESKA, Tobias, 01640 Coswig (DE); SCHMIDT, Tilo, 01640 Coswig (DE); KRAMER, Udo, 01640 Coswig (DE)
(74) Vertreter: Witte, Weller & Partner Patentanwälte mbB
(86) Internationale Anmeldenummer: PCT/EP2009/007946
(87) Internationale Veröffentlichungsnummer: WO 2010/060534

(56) Entgegenhaltungen:
- EP-A1- 1 911 553
- EP-A2- 1 795 676
- DE-A1- 10 252 025
- DE-A1-102007 013 480
- GROESCHINSKI J ET AL: "SICHERHEITSSYSTEME FUER BEARBEITUNGSZENTREN" WERKSTATT UND BETRIEB, CARL HANSER VERLAG, MUNCHEN, DE, Bd. 135, Nr. 1/02, 1. Februar 2002 (2002-02-01), Seite 54/55, XP001089004 ISSN: 0043-2792

## Beschreibung

Die vorliegende Erfindung betrifft einen Sicherheitsschalter zum Erzeugen eines Anlagenfreigabesignals in Abhängigkeit von der Position einer beweglichen Schutztür, mit der ein Gefahrenbereich einer Anlage zugangsgesichert wird, wobei bei Vorliegen des Anlagenfreigabesignals zumindest ein in dem Gefahrenbereich liegender Teil der Anlage betrieben werden kann, mit einen Türteil zum Befestigen an der beweglichen Schutztür und mit einem Rahmenteil zum Befestigen an einem Türgegenstück, mit einem Betätiger, der zwischen einer ersten und einer zweiten Position verstellbar ist, mit einer Ausnehmung, in die der Betätiger in der zweiten Position eingreifen kann, mit einem Sperrglied, das dazu ausgebildet ist, den Betätiger in der zweiten Position zu blockieren, und mit einem ersten Positionssensor, der dazu ausgebildet ist, zumindest eine der Positionen des Betätigers eindeutig zu detektieren, um in Abhängigkeit davon das Anlagenfreigabesignal zu erzeugen.

Ein solcher Sicherheitsschalter ist aus DE 10 2005 057 108 A1 bekannt.

Gattungsgemäße Sicherheitsschalter werden auch als Verriegelungseinrichtungen mit Zuhaltung bezeichnet. Sie werden eingesetzt an Schutztüren, Schutzklappen und dergleichen, die den Zugang zu einer automatisiert arbeitenden Maschine oder Anlage verhindern sollen, solange sich die Maschine oder Anlage in einem gefahrbringenden Zustand befindet. Bei der Maschine kann es sich beispielsweise um einen Roboter, eine Werkzeugmaschine mit schnell drehender Spindel, eine Transport- oder Förderanlage, eine Presse oder eine andere Maschine oder Anlage handeln, von deren Betrieb eine Gefahr für Personen ausgeht, die sich im Arbeitsbereich der Maschine befinden. Die Sicherheitsschalter dienen als Meldegeräte, mit deren Hilfe eine Steuereinheit den geschlossenen Zustand der Schutztür erkennen kann. Die Steuereinheit ist dazu ausgebildet, eine Inbetriebnahme der Maschine oder Anlage nur dann zu ermöglichen, wenn die Schutztür geschlossen ist. Wird die Schutztür im laufenden Betrieb geöffnet (sofern dies mechanisch möglich ist), muss die Steuereinheit die Maschine oder Anlage in einen gefahrlosen Zustand bringen, indem beispielsweise die Stromversorgung zu der Maschine oder Anlage abgeschaltet wird.

Es gibt viele Maschinen und Anlagen, von denen auch nach dem Abschalten noch für eine gewisse Zeit eine Gefahr ausgeht, beispielsweise weil ein Antrieb der Maschine noch ausläuft. Für derartige Situationen werden Sicherheitsschalter benötigt, mit deren Hilfe ein Öffnen der Schutztür solange verhindert wird, bis die Maschine oder Anlage ihren gefahrlosen Zustand erreicht hat. Diese Funktion wird als Zuhaltung bezeichnet.

Üblicherweise besitzen die bekannten Sicherheitsschalter einen sogenannten Betätiger, der an der beweglichen Schutztür angeordnet ist. Bei geschlossener Schutztür greift der Betätiger in eine Aufnahme am Türrahmen, was mit Hilfe eines oder mehrerer Sensoren detektiert wird. Bei einem Sicherheitsschalter mit Zuhaltung wird der Betätiger außerdem in der Betätigeraufnahme gegen Zurückziehen blockiert. Der Betätiger erfüllt in diesem Fall also zwei Funktionen, nämlich einerseits als Detektorelement, mit dessen Hilfe die Schließposition der Schutztür detektiert werden kann, und andererseits als Riegel, der ein Öffnen der Schutztür solange verhindert, wie der Betätiger in der Betätigeraufnahme blockiert ist. Die Freigabe des Betätigers kann über einen elektromotorischen Aktor erfolgen, der von der Steuereinheit betätigt wird, sobald die überwachte Maschine oder Anlage ihren sicheren Zustand eingenommen hat.

Die eingangs genannte DE 10 2005 057 108 A1 beschreibt einen Sicherheitsschalter mit den Funktionen Zuhaltung und Verriegelung. Dieser Sicherheitsschalter besitzt keine Möglichkeit zum Freigeben der Schutztür. In der Praxis wird das für die Entriegelung der Schutztür erforderliche Freigabesignal in einem entfernten Sicherheitsschaltgerät und mit einem im Bereich des Sicherheitsschaltgeräts angeordneten Schalter erzeugt. Die räumliche Trennung ist von Nachteil, wenn die abgesicherte Maschine oder Anlage in Sonderbetriebsarten betrieben werden soll, wie etwa beim Einrichten oder bei einer Fehlerbehebung. Hier entstehen durch die räumliche Trennung Risiken. Auch ein schnelles Eingreifen in die Maschine, beispielsweise bei einer Fehlfunktion, ist aufgrund der räumlichen Trennung

Des Weiteren ist aus dem Stand der Technik eine weitere Offenlegungsschrift bekannt (siehe DE10252025A1), die die Vorrichtung gemäß dem Oberbegriff des Anspruchs 1 offenbart.

Vor diesem Hintergrund ist eine Aufgabe der vorliegenden Erfindung, einen Sicherheitsschalter der eingangs genannten Art dahingehend weiterzubilden und zu verbessern, dass eine einfachere und schnellere Handhabe hinsichtlich der Freigabe einer Schutztür ermöglicht wird.

Diese Aufgabe wird einer Vorrichtung der eingangs genannten Art gelöst, die ferner eine Türfreigabeeinheit umfasst, die einen Verriegelungszustand und einen Entriegelungszustand einnehmen kann, wobei in dem Verriegelungszustand eine Blockade des Betätigers durch das Sperrglied in der zweiten Position zugelassen oder aufrechterhalten wird und in dem Entriegelungszustand eine Blockade des Betätigers durch das Sperrglied in der zweiten Position nicht zugelassen oder aufgehoben wird.

Damit ist es erstmals möglich, direkt am Sicherheitsschalter eine Türfreigabe anzufordern. Das Erzeugen des Freigabesignals kann direkt am Sicherheitsschalter veranlasst werden. Es entfällt die räumliche Trennung zwischen dem Ort, an dem die Türfreigabe bisher angefordert werden musste, und dem Ort, an dem sich die Schutztür befindet. Gemäß der Erfindung arbeitet die Türfreigabeeinheit elektrisch. Die Türfreigabeeinheit ermittelt ein Freigabesignal in Abhängigkeit von Größen, die ihr zugeführt werden. Somit kann die neu eingesetzte Türfreigabeeinheit nicht mit mechanisch arbeitenden Notentriegelungen gleichgesetzt werden.

Die genannte Aufgabe ist daher vollständig gelöst.

In einer Ausgestaltung der Erfindung weist das Türteil den Betätiger und das Rahmenteil weist die Ausnehmung auf.

Diese Maßnahme hat den Vorteil, dass zum Detektieren der geschlossenen und verriegelten Schutztür Sensoren eingesetzt werden können, da bei dieser Anordnung sämtliche beweglichen Komponenten auf der beweglichen Schutztür vereint sind, und somit die Stromanbindung problemlos über das Türgegenstück erfolgen kann.

In einer weiteren Ausgestaltung der Erfindung ist der erste Positionssensor dazu ausgebildet, die zweite Position des Betätigers fehlersicher zu detektieren.

"Fehlersicher" bedeutet in diesem Fall, dass der Sensor die zweite Position des Betätigers nur dann detektieren kann, wenn sich der Betätiger auch tatsächlich in der zweiten Position befindet. Besonders bevorzugt ist es, wenn der Sensor an dem Rahmenteil angeordnet ist, insbesondere im Bereich der Ausnehmung. In diesem Fall genügt nämlich ein einziger Sensor, um die verriegelte Position der Schutztür zuverlässig zu erkennen, was zu einer Freigabe der überwachten Maschine oder Anlage führen kann. Die Anordnung des Sensors im Bereich der Ausnehmung ist besonders bevorzugt, weil sie eine kleinbauende Realisierung mit einer hohen Fehlersicherheit ermöglicht.

In einer weiteren Ausgestaltung der Erfindung ist der erste Positionssensor zum Auslesen eines Transponders ausgebildet und der Betätiger beinhaltet einen Transponder, der so angeordnet ist, dass er in einer der zwei Positionen von dem Positionssensor auslesbar ist. Vorzugsweise ist der Transponder so angeordnet, dass er nur genau in der zweiten Position des Betätigers auslesbar ist. Dies kann beispielsweise dadurch realisiert werden, dass der Transponder in einer Vertiefung an dem Ende des Betätigers angeordnet ist, welches in die Ausnehmung eingreift. Hierdurch wird ein geringer Schaltabstand erreicht, der gewährleistet, dass der erste Positionssensor nur dann anspricht, wenn der Betätiger mit dem Transponder in die Ausnehmung eingefahren ist. Diese bevorzugten Ausgestaltungen ermöglichen eine besonders einfache und kostengünstige Realisierung, die zugleich eine hohe Fehlersicherheit bietet.

In einer weiteren Ausgestaltung der Erfindung ist der Transponder an einer freien Stirnseite des Betätigers angeordnet, die in etwa quer zur Bewegungsrichtung des Betätigers liegt. Vorzugsweise ist der Transponder auf der Stirnseite versenkt angebracht. Der erste Positionssensor sitzt bevorzugt am Grund der Ausnehmung, also gegenüber von dem freien Ende des einfahrenden Betätigers.

In einer weiteren Ausgestaltung der Erfindung ist die Freigabeeinheit mit einer Auswerteeinheit verbunden, wobei die Auswerteeinheit in Abhängigkeit von ihr zugeführten Größen ein Ansteuersignal für einen Aktor erzeugen kann, wobei der Aktor dazu ausgebildet ist, die Lage des Sperrglieds relativ zu dem Betätiger zu beeinflussen, wobei die Freigabeeinheit in dem Entriegelungszustand der Auswerteeinheit eine Freigabeanforderungsgröße zuführt, wobei die Auswerteeinheit bei Vorliegen der Freigabeanforderungsgröße ein Freigabeansteuersignal erzeugen kann, mit dem der Aktor derart angesteuert wird, dass die Blockade des Betätigers in der zweiten Position nicht zugelassen oder aufgehoben wird, wobei das Freigabeansteuersignal dann erzeugt wird, wenn eine der Auswerteeinheit zugeführte Zustandgröße, die die Betriebsart zumindest des Teils der Anlage repräsentiert, anzeigt, dass sich der Teil der Anlage in einer Betriebsart befindet, die nicht dem Automatikbetrieb entspricht, in welchem ein Anwenderprogramm abgearbeitet wird.

Diese Maßnahme hat mehrere Vorteile: Der Einsatz eines Aktors, der derart angesteuert wird, dass die Blockade des Betätigers in der zweiten Position nicht zugelassen oder aufgehoben wird, bedeutet, dass der Sicherheitsschalter nach dem Ruhestromprinzip arbeitet und somit ein maximales Maß an Sicherheit bietet, da die Schutztür selbst bei Unterbrechung der Stromversorgung verriegelt bleibt. Durch die Berücksichtigung der Betriebsart der Anlage bei der Ermittlung des Freigabeansteuersignals wird sichergestellt, dass die Schutztüre nur dann entriegelt wird, wenn die Anlage einen sicheren Zustand eingenommen hat.

In einer weiteren Ausgestaltung der Erfindung umfasst die Türfreigabeeinheit einen Freigabesensor, mit dem eine Türfreigabeanforderung detektiert werden kann, wobei in Abhängigkeit einer detektierten Türfreigabeanforderung die Türfreigabeeinheit ausgehend von dem Verriegelungszustand den Entriegelungszustand einnimmt.

Im Gegenteil zu einer mechanisch realisierten Türfreigabeeinheit, wie dies beispielsweise bei einem Betriebsartenwahlschalter mit mechanischen Schlüsseln der Fall ist, lässt sich der neue Sicherheitsschalter vielfältiger einsetzten. Bei einem Betriebsartenwahlschalter mit mechanischen Schlüsseln können sich beispielsweise im Schloss Verunreinigungen festsetzten, was beispielsweise bei Anlagen, die in der Lebensmittelindustrie eingesetzt werden, vermieden werden sollte.

In einer weiteren Ausgestaltung der zuvor genannten Maßnahme ist der Freigabesensor zum Auslesen eines Transponders ausgebildet, wobei der Transponder in einer mobilen Türfreigabeanforderungseinheit angeordnet ist, wobei die Türfreigabeanforderung detektiert wird, wenn sich der Transponder im Bereich des Freigabesensors befindet.

Diese Maßnahme erlaubt eine sehr flexible Handhabe der Türfreigabe. Dadurch dass Türfreigabeanforderung berührungslos detektiert werden kann, besteht ein großes Maß an Flexibilität bzgl. Der Anbringung der Türfreigabeeinheit an der Schutztür. Darüber hinaus können Transponder programmiert werden, was große Freiheitsgrade in der Vergabe von Rechten für die Anforderung einer Türfreigabe ermöglicht.

In einer weiteren Ausgestaltung der zuvor genannten Maßnahme enthält der Transponder Identifikationsdaten, die von dem Freigabesensor als Türfreigabeanforderung detektiert werden, wobei die Freigabeeinheit eine Signalverarbeitungseinheit umfasst, in der in Abhängigkeit der Identifikationsdaten eine Freigabeanforderungsgröße ermittelt wird, die einer Auswerteeinheit zugeführt wird, wobei die Auswerteeinheit in Abhängigkeit von ihr zugeführten Größen ein Ansteuersignal für einen Aktor erzeugen kann, wobei der Aktor dazu ausgebildet ist, die Lage des Sperrglieds relativ zu dem Betätiger zu beeinflussen, wobei die Auswerteeinheit bei Vorliegen der Freigabeanforderungsgröße ein Freigabeansteuersignal erzeugt, mit dem der Aktor derart angesteuert wird, dass die Blockade des Betätigers in der zweiten Position nicht zugelassen oder aufgehoben wird, wenn eine der Auswerteeinheit zugeführte Zustandgröße, die die Betriebsart zumindest des Teils der Anlage repräsentiert, anzeigt, dass sich der Teil der Anlage in einer Betriebsart befindet, der nicht dem Automatikbetrieb entspricht, in welchem ein Anwenderprogramm abgearbeitet wird.

Jeder Transponder verfügt über ihm zugeordnete Identifikationsdaten, über die er eindeutig identifizierbar ist. Dies bildet die Grundlage dafür, dem jeweiligen Transponder und somit derjenigen Person, die im Besitz dieses Transponders ist, unterschiedliche Rechte, was die Anforderung einer Türfreigabe angeht, einräumen zu können.

In einer weiteren Ausgestaltung der zuvor genannten Maßnahme umfasst die Freigabeeinheit eine Vielzahl von Eingabeelementen, mit denen Eingaben erfasst werden können, wobei die erfassten Eingaben der Signalverarbeitungseinheit zugeführt werden, wobei in der Signalverarbeitungseinheit die Freigabegröße in Abhängigkeit der erfassten Eingaben ermittelt wird, wobei die Eingabeelemente dazu ausgebildet sind, dass diese von der Signalverarbeitungseinheit in einen aktiven Zustand gebracht werden können, wobei die Eingabeelemente lediglich in dem aktiven Zustand Eingaben erfassen können, wobei jedem dieser Eingabeelemente einer von mehreren untereinander unterschiedlichen Sonderbetriebszuständen zugeordnet ist, in dem der Teil der Anlage betrieben werden kann, wobei sich jeder dieser Sonderbetriebszustände von einer Automatikbetriebsart unterscheidet, in welchem der Teil der Anlage gemäß einem Anwenderprogramm betrieben wird, wenn die Freigabeeinheit den Verriegelungszustand einnimmt, wobei die Signalverarbeitungseinheit in Abhängigkeit der Identifikationsdaten festlegt, welche Eingabeelemente in den aktiven Zustand gebracht werden.

Diese Maßnahme stellt eine einfache und übersichtliche Realisierung eines Betriebsartenwahlschalters dar. Der Sicherheitsschalter weist mehrere Eingabeelemente auf, die vorzugsweise als Taster ausgebildet sind. Jedem dieser Taster ist eine Sonderbetriebsart zugewiesen. Wird nun unter Verwendung eines Transponders eine Türfreigabe angefordert, so werden gemäß der Identifikationsdaten, die der Transponder enthält, diejenigen Sonderbetriebszustände zur Auswahl freigeschaltet, die diesem Transponder und somit dessen Besitzer zugestanden werden. Vorzugsweise sind die Eingabeelemente und/oder die Signalverarbeitungseinheit so ausgebildet, dass immer nur eine Eingabe angenommen wird. D.h. es können nicht gleichzeitig zwei Sonderbetriebszustände ausgewählt werden. Vorzugsweise kann in einem vorgelagerten Schritt zunächst überprüft werden, ob der Besitzer des Transponders überhaupt berechtigt ist, eine Türfreigabe anzufordern.

In einer weiteren Ausgestaltung der Erfindung enthält der Transponder Türfreigabeanforderungsdaten, die von dem Freigabesensor als Türfreigabeanforderung detektiert werden, wobei die Freigabeeinheit eine Signalverarbeitungseinheit umfasst, in der in Abhängigkeit der Türfreigabeanforderungsdaten eine Freigabeanforderungsgröße ermittelt wird, die einer Auswerteeinheit zugeführt wird, wobei die Auswerteeinheit in Abhängigkeit von ihr zugeführten Größen ein Ansteuersignal für einen Aktor erzeugen kann, wobei der Aktor dazu ausgebildet ist, die Lage des Sperrglieds relativ zu dem Betätiger zu beeinflussen, wobei die Auswerteeinheit bei Vorliegen der Freigabeanforderungsgröße ein Freigabeansteuersignal erzeugt, mit dem der Aktor derart angesteuert wird, dass die Blockade des Betätigers in der zweiten Position nicht zugelassen oder aufgehoben wird, wenn eine der Auswerteeinheit zugeführte Zustandgröße, die die Betriebsart zumindest des Teils der Anlage repräsentiert, anzeigt, dass sich der Teil der Anlage in einer Betriebsart befindet, der nicht dem Automatikbetrieb entspricht, in welchem ein Anwenderprogramm abgearbeitet wird.

In einer weiteren Ausgestaltung der Erfindung enthält der Transponder Sonderbetriebsartdaten, die einen von mehreren untereinander unterschiedlichen Sonderbetriebszuständen repräsentieren, in dem der Teil der Anlage betrieben werden kann, wobei sich jeder dieser Sonderbetriebszustände von einer Automatikbetriebsart unterscheidet, in welcher der Teil der Anlage gemäß einem Anwenderprogramm betrieben wird, wenn die Freigabeeinheit den Verriegelungszustand einnimmt, wobei die Sonderbetriebsartdaten von dem Freigabesensor als Türfreigabeanforderung detektiert werden, wobei die Freigabeeinheit eine Signalverarbeitungseinheit umfasst, in der in Abhängigkeit der Sonderbetriebsartdaten eine Freigabeanforderungsgröße ermittelt wird, die einer Auswerteeinheit zugeführt wird, wobei die Auswerteeinheit in Abhängigkeit von ihr zugeführten Größen ein Ansteuersignal für einen Aktor erzeugen kann, wobei der Aktor dazu ausgebildet ist, die Lage des Sperrglieds relativ zu dem Betätiger zu beeinflussen, wobei die Auswerteeinheit bei Vorliegen der Freigabeanforderungsgröße ein Freigabeansteuersignal erzeugt, mit dem der Aktor derart angesteuert wird, dass die Blockade des Betätigers in der zweiten Position nicht zugelassen oder aufgehoben wird, wenn eine der Auswerteeinheit zugeführte Zustandgröße, die die Betriebsart zumindest des Teils der Anlage repräsentiert, anzeigt, dass sich der Teil der Anlage in derjenigen Sonderbetriebsart befindet, die durch die Sonderbetriebsartdaten repräsentiert wird.

Diese Maßnahme hat den Vorteil, dass die Sonderbetriebszustände direkt auf dem Transponder hinterlegt sind. Es entfällt somit die Eingabe über die Eingabeelemente. Diese Realisierung entspricht der Funktion eines Betriebsartenwahlschalters. Durch Vorhalten des Transponders vor den Freigabesensor wird die Anlage in die gewünschte Sonderbetriebsart überführt und die Schutztür wird entriegelt, sobald dieser eingenommen ist.

In einer weiteren Ausgestaltung der Erfindung enthält der Transponder Abschaltdaten, die einen abgeschalteten Zustand des Teils der Anlage repräsentieren, wobei die Abschaltdaten von dem Freigabesensor als Türfreigabeanforderung detektiert werden, wobei die Freigabeeinheit eine Signalverarbeitungseinheit umfasst, in der in Abhängigkeit der Abschaltdaten eine Freigabeanforderungsgröße ermittelt wird, die einer Auswerteeinheit zugeführt wird, wobei die Auswerteeinheit in Abhängigkeit von ihr zugeführten Größen ein Ansteuersignal für einen Aktor erzeugen kann, wobei der Aktor dazu ausgebildet ist, die Lage des Sperrglieds relativ zu dem Betätiger zu beeinflussen, wobei die Auswerteeinheit bei Vorliegen der Freigabeanforderungsgröße ein Freigabeansteuersignal erzeugt, mit dem der Aktor derart angesteuert wird, dass die Blockade des Betätigers in der zweiten Position nicht zugelassen oder aufgehoben wird, wenn eine der Auswerteeinheit zugeführte Zustandgröße, die die Betriebsart zumindest des Teils der Anlage repräsentiert, anzeigt, dass sich der Teil der Anlage in dem abgeschalteten Zustand befindet.

In dieser Ausgestaltung ist die Funktion eines Reparaturschalters realisiert. Durch Vorhalten des Transponders vor den Freigabesensor wird die Anlage von der Stromversorgung getrennt und die Schutztür wird entriegelt, sobald dieser eingenommen ist.

In einer weiteren Ausgestaltung der Erfindung ist das Sperrglied zwischen einer dritten und einer vierten Position verstellbar ist und weist das Rahmenteil eine Feder auf, die das Sperrglied in der dritten Position vorspannt, wobei die dritte Position dazu ausgebildet ist, den Betätiger in der zweiten Position zu blockieren, wobei das Rahmenteil ferner einen Aktor aufweist, der dazu ausgebildet ist, das Sperrglied gegen die Feder in die vierte Position zu bewegen oder diesen in der vierten Position zu halten, wenn die Türfreigabeeinheit den Entriegelungszustand einnimmt.

Diese Ausgestaltung spannt das Sperrglied - wiederum ohne elektrische Zusatzenergie von außen - in der "sicheren Position vor. Das Sperrglied blockiert den Betätiger daher automatisch, sobald eine Blockade überhaupt möglich ist. Diese Ausgestaltung ist eine besonders einfache und zuverlässige Realisierung.

Die Anordnung des Aktors in dem Rahmenteil trägt ebenfalls dazu bei, dass das Türteil ohne elektrische Versorgungsleitungen auskommt und dementsprechend einfach zu montieren ist. Die Verwendung eines Hubmagneten oder eines ähnlichen translatorischen Aktors hat sich als besonders effiziente Lösung erwiesen, um eine Freigabe des Sperrgliedes zu erreichen, da die Freigabe in dieser Ausgestaltung über den Türspalt zwischen Rahmenteil und Türteil erfolgen muss.

In einer weiteren Ausgestaltung der der zuvor genannten Maßnahme umfasst der Sicherheitsschalter einen zweiten Positionssensor, der dazu ausgebildet ist, die dritte Position des Sperrgliedes fehlersicher zu detektieren.

Auch in diesem Fall, kann der zweite Positionssensor die dritte Position des Sperrgliedes nur dann detektieren kann, wenn sich dieses auch tatsächlich in der dritten Position befindet. Vorzugsweise ist der zweite Positionssensor als Reed-Kontakt ausgebildet, wobei der Magnet im Sperrglied und das Relais im Rahmenteil untergebracht ist.

In einer weiteren Ausgestaltung der Erfindung enthält der Transponder Identifikationsdaten, die von dem Freigabesensor detektiert werden, wobei die detektierten Identifikationsdaten in einer Speichereinheit abgelegt werden, wobei die Freigabeeinheit solange den Freigabezustand einnimmt, wie Identifikationsdaten in der Speichereinheit abgelegt sind. Vorteilhafterweise werden bei einem erneuten Detektieren der Identifikationsdaten diese aus der Speichereinheit gelöscht.

Durch diese Maßnahme lässt sich eine Türfreigabe gemäß der Funktionalität LOTO (Log Out Tag Out) realisieren. Eine freigegebene Schütztür kann erst wieder verriegelt und somit die Anlage wieder angefahren werden, wenn sämtliche Personen, die eine Freigabe der Schutztür angeordert haben, die Anlage wieder verlassen haben und dies quasi durch Vorhalten ihres Transponders vor den Freigabesensor quittiert haben. Vorzugsweise werden die Identifikationsdaten nullspannungssicher gespeichert.

In einer weiteren Ausgestaltung der zuvor genannten Maßnahme weist der Sicherheitsschalter ferner eine Anzeigeeinheit auf, mit der unter Verwendung der gespeicherten Identifikationsdaten angezeigt wird, ob und/oder wie viele Personen sich in dem Gefahrenbereich aufhalten.

In einfacher Art und Weise können sich diejenigen, die eine Türfreigabe angefordert haben, informieren, ob sich noch jemand in der Anlage befindet. Diese Maßnahme trägt zur Betriebssicherheit bei.

In einer weiteren Ausgestaltung der Erfindung ist die Türfreigabeeinheit und der Sicherheitsschalter eine bauliche Einheit bilden, wobei die Türfreigabeeinheit in dem Rahmenteil untergebracht.

Diese Maßnahme ist eine konsequente Umsetzung des neuen Ansatzes. Die Türfreigabeeinheit ist in dem Sicherheitsschalter integriert. Somit müssen nicht zwei eigenständige bauliche Einheiten an der Schutztür angebracht werden, sondern lediglich eine.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer Vorrichtung mit dem neuen Sicherheitsschalter,
- Fig. 2: eine Sicht von vorn auf ein Ausführungsbeispiel des neuen Sicherheitsschalters,
- Fig. 3: eine Sicht von oben auf den Sicherheitsschalter aus Fig. 2,
- Fig. 4: den Sicherheitsschalter aus Fig. 2 in einer teilweise geschnittenen, Darstellung und in verriegeltem Zustand,
- Fig.5: den Sicherheitsschalter aus Fig. 4 in entriegeltem, geschlossenem Zustand,
- Fig. 6: den Sicherheitsschalter aus Fig. 4 in geöffnetem Zustand,
- Fig. 7: die steuerungstechnische Funktionalität des neuen Sicherheitsschalter in Form eines schematischen Blockschaltbildes.

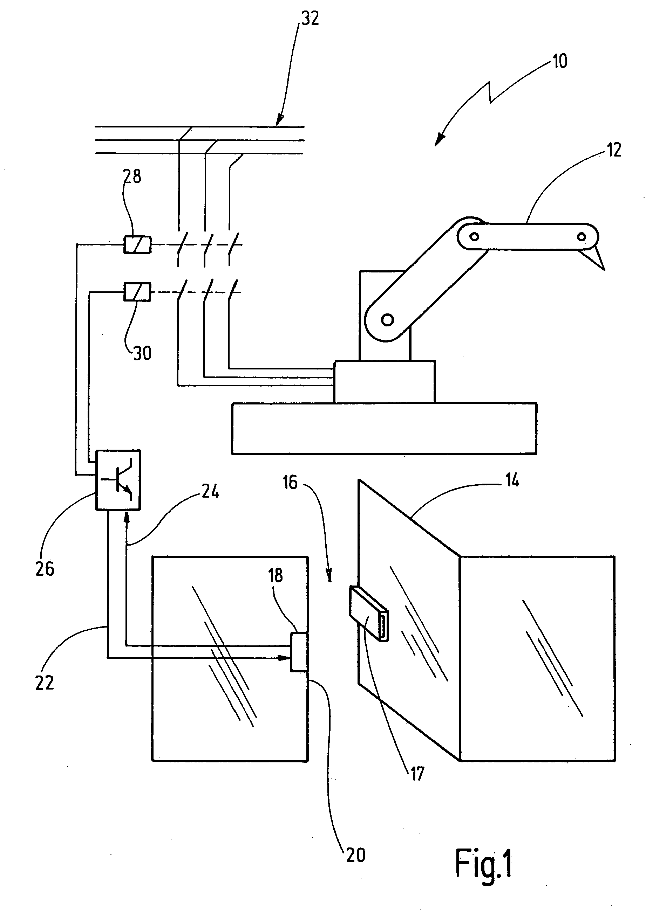

In Fig. 1 ist eine Vorrichtung mit dem neuen Sicherheitsschalter in ihrer Gesamtheit mit der Bezugsziffer 10 bezeichnet. Die Vorrichtung 10 beinhaltet hier einen Roboter 12, dessen Arbeitsbereich mit Hilfe einer Schutztür 14 abgesichert ist. Für den Fall, dass es sich um eine kleine Anlage handelt, die mit einer Sicherheitssteuerung gesteuert wird, entspricht der Roboter dieser Anlage. Für den Fall einer komplexen Anlage stellt der Roboter einen Teil dieser Anlage dar. An der Schutztür 14 ist ein Sicherheitsschalter 16 gemäß der vorliegenden Erfindung angeordnet. Der Sicherheitsschalter 16 beinhaltet ein Türteil 17, das an der beweglichen Schutztür 14 befestigt ist, und ein Rahmenteil 18, das an einem Türgegenstück 20 sitzt. In dem dargestellten Ausführungsbeispiel ist das Türgegenstück 20 ein feststehender Anschlag für die Schutztür 14. In anderen Ausführungsbeispielen kann das Türgegenstück 20 ein zweiter Türflügel einer zweiteiligen Schutztür sein. Dass es sich im Ausführungsbeispiel um eine vertikal angeschlagene Tür handelt, soll keine einschränkende Wirkung haben. Der neue Sicherheitsschalter kann auch bei einer horizontal angeschlagenen Tür, einer Klappe, oder einer Schiebetür eingesetzt werden.

Das Rahmenteil 18 ist über zwei Leitungen 22, 24 mit einem Sicherheitsschaltgerät 26 verbunden. Das Sicherheitsschaltgerät 26 ist beispielsweise ein Sicherheitsschaltgerät des Typs PNOZ®, die von der Anmelderin der vorliegenden Erfindung vertrieben wird. Es handelt sich hier um mehrkanalig-redundante Sicherheitsschaltgeräte, die dazu ausgebildet sind, die Ausgangssignale von Meldegeräten, wie dem Sicherheitsschalter 16, auszuwerten und in Abhängigkeit davon einen elektrischen Verbraucher abzuschalten. Der elektrische Verbraucher ist in diesem Fall der Roboter 12. Dementsprechend steuert das Sicherheitsschaltgerät 26 zwei Schütze 28, 30 an, deren Arbeitskontakte in der Verbindung zwischen einer Stromversorgung 32 und dem Roboter 12 angeordnet sind. Alternativ zu dem Sicherheitsschaltgerät 26 könnte der Sicherheitsschalter 16 auch an eine programmierbare Sicherheitssteuerung angeschlossen sein, wie sie von der Anmelderin der vorliegenden Erfindung unter der Bezeichnung PSS® vertrieben wird.

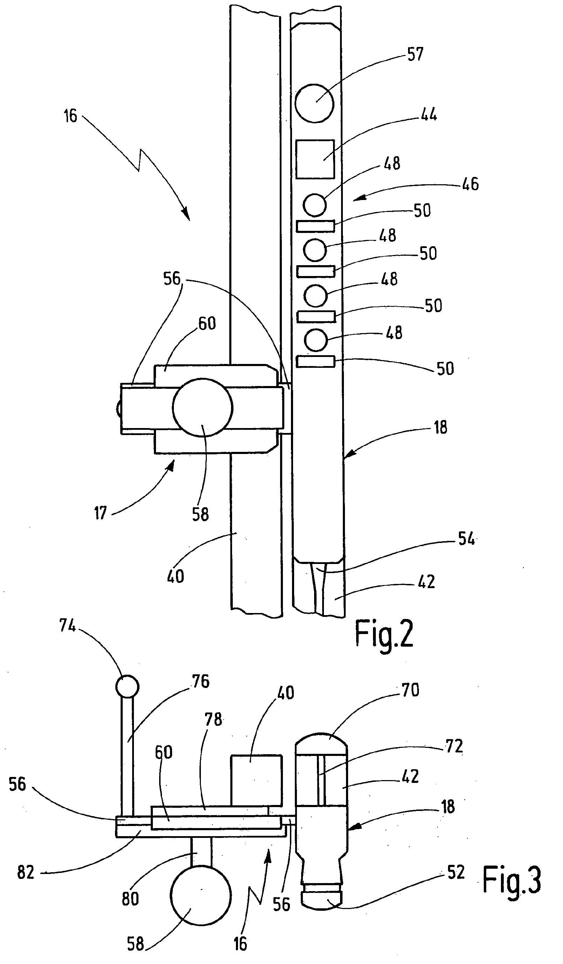

In Fig. 2 ist ein Ausführungsbeispiel des Sicherheitsschalters 16 mit dem Türteil 17 und dem Rahmenteil 18 dargestellt. Das Türteil 17 ist hier an einem ersten Rahmenelement 40 der Schutztür 14 angeordnet. Das Rahmenteil 18 ist an einem zweiten Rahmenelement 42 der Schutztür 14 angeordnet. Das Rahmenteil 18 weist einen Freigabesensor 44 und eine Vielzahl 46 von Eingabeelementen 48 auf. Unter jedem Eingabeelement 48 ist ein jeweils zugeordnetes Beschriftungsfeld 50 angeordnet. Jedem Eingabeelement 50 ist eine Sonderbetriebsart zugeordnet, in der der Roboter 12 betrieben werden kann. Um welche Sonderbetriebsart es sich handelt, ist auf dem jeweiligen Beschriftungsfeld 50 vermerkt. Ferner weist das Rahmenteil 18 einen Not-Aus-Taster 52 auf. Über eine Anschlussleitung 54 wird das Rahmenteil 18 mit Strom versorgt. Mit der Bezugsziffer 54 ist ein die beiden Leitungen 22, 24 enthaltendes Verbindungskabel bezeichnet.

Das Türteil 17 beinhaltet einen Betätiger 56, der in eine in Fig. 2 nicht dargestellte Ausnehmung des Rahmenteils 18 eingeführt werden kann. Hierzu kann der Betätiger 56 über einen Schiebeknopf 58 bewegt werden. Der Betätiger 56 ist in einer Führung 60 gelagert.

In Fig. 3 ist der Sicherheitsschalter 16 in einer Sicht von oben dargestellt. An dem zweiten Rahmenelement 42 ist im Bereich des Rahmenteils 18 auf der dem Roboter 12 zugewandten Seite ein erstes Entriegelungselement 70 angebracht, welches über eine Entriegelungsstange 72 mit dem Rahmenteil 18 in Wirkverbindung steht. Mit dem Entriegelungselement 70 kann eine Person, die versehentlich in Anlage eingeschlossen wurde, die Schutztür 14 mechanisch entriegeln. Durch Betätigen des Entriegelungselements 70 wird beispielsweise ein die Verrieglung der Schutztüre bewirkendes Element, welches in dem Rahmenteil 18 enthalten ist, zerstört oder mechanisch festgesetzt. Wurde die Schutztür 14 auf diese Art und Weise entriegelt, kann sie durch Greifen des Öffnungsgriffes 74, der über eine Öffnungsstange 76 mit dem Betätiger 56 verbunden ist, geöffnet werden.

Die Führung 60 ist mittels einer ersten Halteplatte 78 an dem ersten Rahmenelement 40 befestigt. Der Schiebeknopf 58 ist über eine Schiebestange 80 an einer zweiten Halteplatte 82 befestigt, an der wiederum der Betätiger 56 befestigt ist.

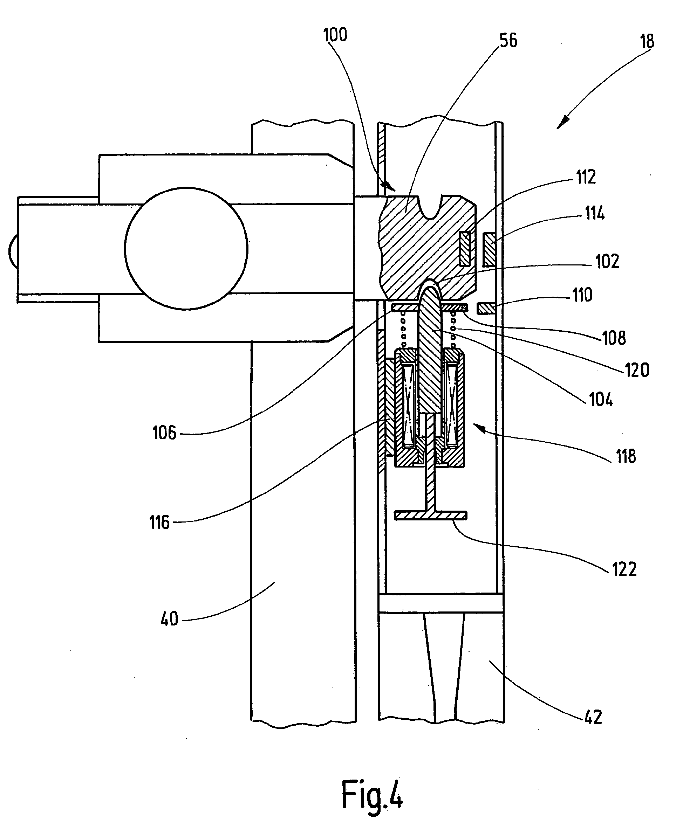

In Fig. 4 sind das Türteil 17 und das Rahmenteil 18 teilweise geschnitten dargestellt. Der Betätiger 56 greift in eine Ausnehmung 100 des Rahmenteils 18 ein. Der Betätiger 56 weist eine Ausformung 102 auf, in die ein Sperrglied 104 eingreifen kann. Das Sperrglied 104 besitzt an seinem dem Betätiger zugewandten Ende ein scheibenförmiges Element 106, in welches ein Magnet 108 eingelassen ist. Dieser Magnet 108 bildet zusammen mit einem Relais 110 einen als Reed-Kontakt ausgebildeten zweiten Positionssensor, mit dem eine dritte Position des Speergliedes 104 detektiert werden kann. Der Betätiger weist einen Transponder 112 auf, der von einem ersten Positionssensor 114 detektiert werden kann. Mittels einer Anbringungsplatte 116 ist ein in seiner Gesamtheit mit der Bezugsziffer 118 bezeichneter Aktor in dem Rahmenteil 18 angebracht. Der Aktor 118 ist hier als Hubmagnet ausgebildet. Zwischen demjenigen Gehäuseteil des Aktors 118, der dem Betätiger 56 zugeordnet ist, und dem scheibenförmigen Element 106 des Sperrglieds 104 ist eine Feder 120 angeordnet, die das Sperrglied 104 in einer Ruheposition derart vorspannt, dass es in die Ausformung 102 des Betätigers 56 eingreift. Diese Ruheposition entspricht einer dritten Position. Das Sperrglied 104 weist an seinem dem Betätiger 56 abgewandten Ende ein Entriegelungselement 122 auf. Mit Hilfe dieses Entriegelungselements 122 kann die Schutztür 14 im Notfall entriegelt werden. Hierzu ist eine im Rahmenteil 18 vorhandene, in Fig. 2 jedoch nicht dargestellte Blende zu entfernen. Durch die entstehende Öffnung kann das Entriegelungselement 122 gegriffen und das Sperrglied 104 gegen die Kraft der Feder 120 vom Betätiger 56 so weit wegbewegt werden, dass die Schutztür 14 entriegelt ist und sich öffnen lässt.

In der Darstellung in Fig. 4 befindet sich der Betätiger 56 in einer zweiten Position, in der er in die Ausnehmung 100 eingreift. In Fig. 4 wurde aus Gründen der Übersichtlichkeit auf die Darstellung von Signalleitungen verzichtet.

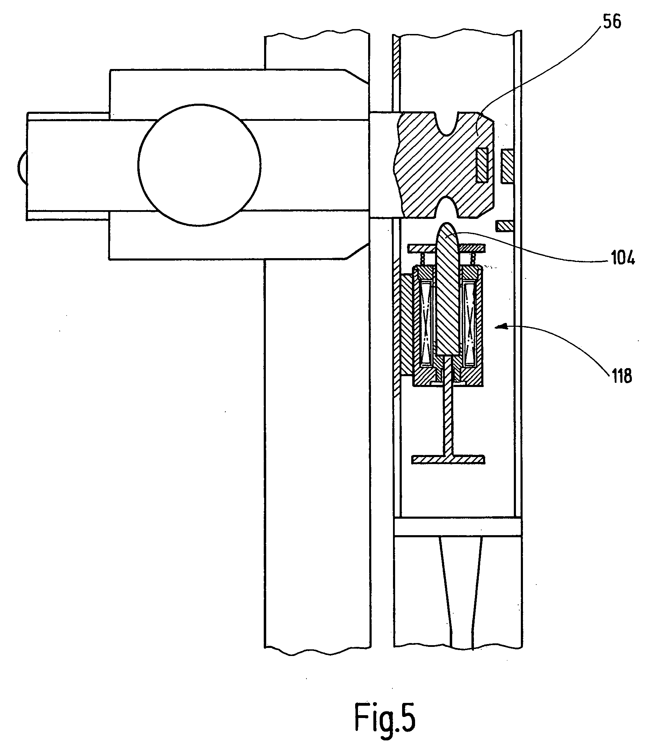

In der Darstellung in Fig. 5 befindet sich der Betätiger ebenfalls in der zweiten Position. Das Sperrglied 104 nimmt aufgrund einer entsprechenden Ansteuerung des Aktors 118 eine vierte Position ein, in der das Sperrglied nicht mehr in die Ausformung 102 eingreift. Der Betätiger 56 ist somit nicht mehr verriegelt und kann von Hand aus der Ausnehmung 100 heraus bewegt werden.

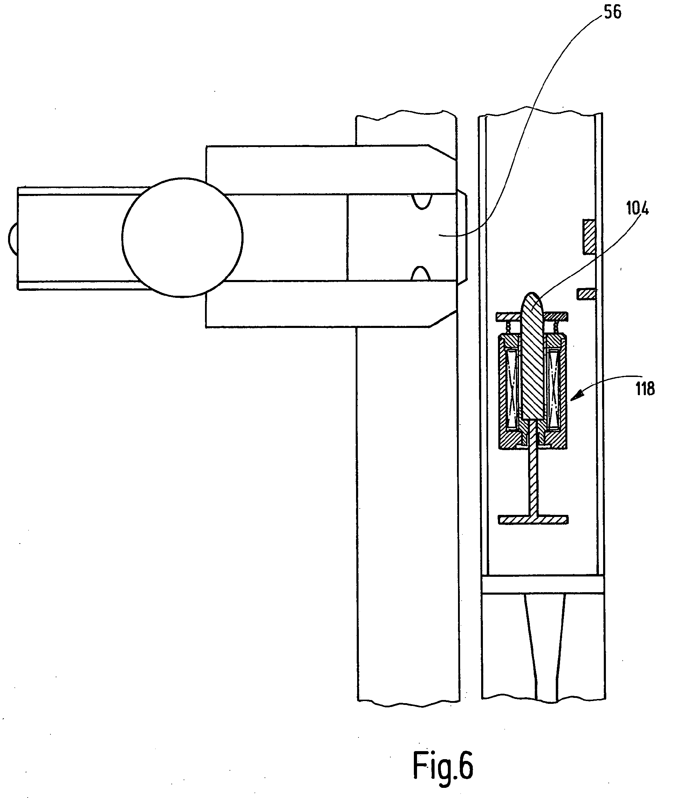

In Fig. 6 ist der Aktor 118 nach wie vor aktiviert, das Sperrglied 104 nimmt die vierte Position ein. Der Betätiger 56 wurde von Hand aus der Ausnehmung 100 herausbewegt und befindet sich somit in einer ersten Position.

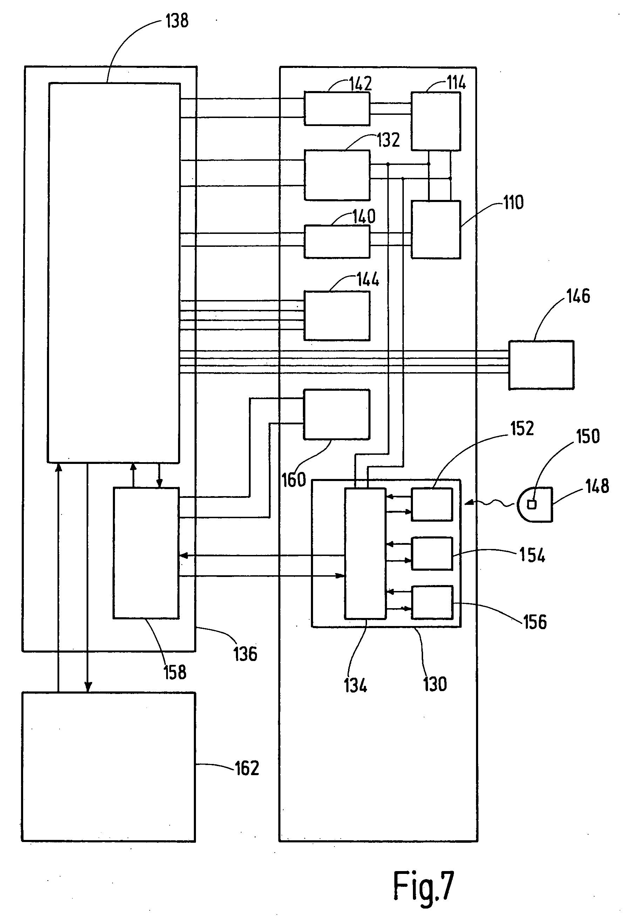

In Fig. 7 ist der neue Sicherheitsschalter 16 anhand von Funktionsblöcken dargestellt. Bezugsziffer 130 bezeichnet die Türfreigabeeinheit des neuen Sicherheitsschalters. Der Sicherheitsschalter 16 besitzt ferner eine Spannungsversorgung 132, mit der unter anderem der ersten Positionssensor 114 und das Relais 110 versorgt werden. Zudem wird eine Signalverarbeitungseinheit 134, etwa ein Mikroprozessor, in der Türfreigabeeinheit 130 von der Spannungsversorgung 132 mit Spannung versorgt. Mit Bezugsziffer 136 ist ein Funktionsblock bezeichnet, der das Sicherheitsschaltgerät 26 aus Fig. 1 oder eine andere entfernte Sicherheitssteuerung repräsentiert. Mit dem Sicherheitsschaltgerät 136 wird der Sicherheitsschalter 16 angesteuert. Dies erfolgt im Wesentlichen über einen Steuerblock 138. So wird über diesen Steuerblock 138 unter Ansteuerung eines ersten Schaltelements 140 beispielsweise das Relais 110 ausgewertet und unter Ansteuerung eines zweiten Schaltelements 142 der erste Positionssensor 114 ausgewertet.

Mit der Bezugsziffer 144 ist ein Block bezeichnet, der den Not-Aus-Taster 52 repräsentiert. Mit der Bezugsziffer 146 ist ein Zustimmtaster bezeichnet, der optional an den Sicherheitsschalter 16 angeschlossen werden kann. Mit der Bezugsziffer 148 ist eine Türfreigabeanforderungseinheit bezeichnet, die einen Transponder 150 aufweist. Mittels eines Freigabesensors 152 kann eine von dem Transponder 150 generierte Türfreigabeanforderung detektiert werden. Die dabei erfassten Daten werden der Signalverarbeitungseinheit 134 zugeführt. Handelt es sich bei den erfassten Daten um Identifikationsdaten, so werden diese in der Signalverarbeitungseinheit 134 dahingehend ausgewertet, welche der zu dem Block 154 zusammengefassten Eingabeelemente in einen aktiven Zustand gebracht werden. Über die Eingabeelemente, die sich in einem aktiven Zustand befinden, kann der Benutzer der Türfreigabeanforderungseinheit 148 dann eine Sonderbetriebsart anwählen, in der der Roboter 12 betrieben werden soll. Die Signalverarbeitungseinheit 134 leitet die Identifikationsdaten ferner einer Speichereinheit 156 zu, in der diese Daten nullspannungssicher gespeichert werden.

Wurde durch Betätigen eines der Eingabeelemente eine Sonderbetriebsart angewählt, führt die Signalverarbeitungseinheit 134 dies einer Auswerteeinheit 158 zu. Die Auswerteeinheit 158 erzeugt in Abhängigkeit der ihr zugeführten Größen Ansteuersignale, mit denen der durch einen Block 160 repräsentierte Aktor 118 angesteuert werden kann. Als eine Größe, die hierbei in der Auswerteeinheit 158 ausgewertet wird handelt es sich um eine Zustandsgröße, die der Sicherheitssteuerung 136 von einer Anlagensicherheitssteuerung 162 zugeführt. Die Zustandsgröße repräsentiert die Betriebsart für den Roboter 12. Die Auswerteeinheit 158 kann lediglich dann den Aktor 118 ansteuern, wenn sich der Roboter nicht in einem Automatikbetrieb befindet.

Der Auswerteeinheit 158 werden ausgehend von dem Relais 114, dem ersten Positionssensor 110 und der Signalverarbeitungseinheit 134 Größen zugeführt, anhand der diese feststellen kann, ob die Schutztür 14 verriegelt ist oder nicht, welche Sonderbetriebsart ausgewählt wurde, und welche Identifikationsdaten in der Speichereinheit 156 gespeichert wurden.

## Patentansprüche

1. Vorrichtung mit einem Sicherheitsschaltgerät (26; 136) und einem Sicherheitsschalter (16) zum Erzeugen eines Anlagenfreigabesignals in Abhängigkeit von der Position einer beweglichen Schutztür (14), mit der ein Gefahrenbereich einer Anlage (12) zugangsgesichert wird, wobei das Sicherheitsschaltgerät (26; 136) den Sicherheitsschalter (16) ansteuert und Ausgangssignale von dem Sicherheitsschalter (16) auswertet und in Abhängigkeit davon einen elektrischen Verbraucher in der Anlage (12) abschaltet, wobei bei Vorliegen des Anlagenfreigabesignals von dem Sicherheitsschalter (16) zumindest ein in dem Gefahrenbereich liegender Teil der Anlage (12) betrieben werden kann, wobei der Sicherheitsschalter (16) ein Türteil (17) zum Befestigen an der beweglichen Schutztür (14) und ein Rahmenteil (18) zum Befestigen an einem Türgegenstück (42) aufweist, ferner einen Betätiger (56), der zwischen einer ersten und einer zweiten Position verstellbar ist, eine Ausnehmung (100), in die der Betätiger (56) in der zweiten Position eingreifen kann, ein Sperrglied (104), das dazu ausgebildet ist, den Betätiger (56) in der zweiten Position zu blockieren, einen Aktor (118), der dazu ausgebildet ist, die Lage des Sperrglieds (104) relativ zu dem Betätiger (56) zu beeinflussen, und einen ersten Positionssensor (114), der dazu ausgebildet ist, zumindest eine der Positionen des Betätigers (56) eindeutig zu detektieren, um in Abhängigkeit davon das Anlagenfreigabesignal zu erzeugen, und wobei das Sicherheitsschaltgerät (26; 136) eine Auswerteeinheit (158) aufweist, die in Abhängigkeit von ihr zugeführten Größen ein Ansteuersignal für den Aktor (118) erzeugen kann,
**dadurch gekennzeichnet, dass** der Sicherheitsschalter (16) außerdem eine elektrisch arbeitende Türfreigabeeinheit (130) aufweist, die es ermöglicht, direkt am Sicherheitsschalter (16) eine Türfreigabe anzufordern und die einen Verriegelungszustand und einen Entriegelungszustand einnehmen kann, wobei in dem Verriegelungszustand eine Blockade des Betätigers (56) durch das Sperrglied (104) in der zweiten Position zugelassen oder aufrechterhalten wird und in dem Entriegelungszustand eine Blockade des Betätigers (56) durch das Sperrglied (104) in der zweiten Position nicht zugelassen oder aufgehoben wird, wobei die Türfreigabeeinheit (130) der Auswerteeinheit (158) in dem Entriegelungszustand eine Freigabeanforderungsgröße zuführt, wobei die Auswerteeinheit (158) bei Vorliegen der Freigabeanforderungsgröße ein Freigabeansteuersignal erzeugen kann, mit dem der Aktor (118) derart angesteuert wird, dass die Blockade des Betätigers (56) in der zweiten Position aufgehoben wird.

2. Vorrichtung nach Anspruch 1, **dadurch gekennzeichnet, dass** das Türteil (17) den Betätiger (56) und das Rahmenteil (18) die Ausnehmung (100) aufweist.

3. Vorrichtung nach einem der vorstehenden Ansprüche, **dadurch gekennzeichnet, dass** der erste Positionssensor (114) dazu ausgebildet ist, die zweite Position des Betätigers (56) fehlersicher zu detektieren.

4. Vorrichtung nach einem der vorstehenden Ansprüche, **dadurch gekennzeichnet, dass** der erste Positionssensor (114) an dem Rahmenteil (18) angeordnet ist, und zwar vorzugsweise im Bereich der Ausnehmung (100).

5. Vorrichtung nach einem der vorstehenden Ansprüche, **dadurch gekennzeichnet, dass** der erste Positionssensor (114) zum Auslesen eines Transponders (112) ausgebildet ist und dass der Betätiger (56) einen ersten Transponder (112) beinhaltet, der so angeordnet ist, dass er in einer der zwei Positionen von dem Positionssensor (114) auslesbar ist.

6. Vorrichtung nach einem der vorstehenden Ansprüche, **dadurch gekennzeichnet, dass** die Auswerteeinheit (158) das Freigabeansteuersignal dann erzeugt, wenn eine der Auswerteeinheit (158) zugeführte Zustandgröße, die die Betriebsart des Teils der Anlage (12) repräsentiert, anzeigt, dass sich der Teil der Anlage (12) in einer Betriebsart befindet, der nicht dem Automatikbetrieb entspricht, in welchem ein Anwenderprogramm abgearbeitet wird.

7. Vorrichtung nach einem der vorstehenden Ansprüche, **dadurch gekennzeichnet, dass** die Türfreigabeeinheit (130) einen Freigabesensor (44; 152) umfasst, mit dem eine Türfreigabeanforderung detektiert werden kann, wobei in Abhängigkeit einer detektierten Türfreigabeanforderung die Türfreigabeeinheit (130) den Entriegelungszustand einnimmt.

8. Vorrichtung nach Anspruch 7, **dadurch gekennzeichnet, dass** der Freigabesensor (44; 152) zum Auslesen eines weiteren Transponders (150) ausgebildet ist, wobei der weitere Transponder (150) in einer mobilen Türfreigabeanforderungseinheit (148) angeordnet ist, wobei die Türfreigabeanforderung detektiert wird, wenn sich der weitere Transponder (150) im Bereich des Freigabesensors (44; 152) befindet.

9. Vorrichtung nach Anspruch 8, **dadurch gekennzeichnet, dass** der weitere Transponder (150) Identifikationsdaten enthält, die von dem Freigabesensor (44; 152) als Türfreigabeanforderung detektiert werden.

10. Vorrichtung nach Anspruch 9, **dadurch gekennzeichnet, dass** die Türfreigabeeinheit (130) eine Signalverarbeitungseinheit (134) und eine Vielzahl von Eingabeelementen (48) umfasst, mit denen Eingaben erfasst werden können, wobei die erfassten Eingaben der Signalverarbeitungseinheit (134) zugeführt werden, wobei in der Signalverarbeitungseinheit (134) die Freigabeanforderungsgröße in Abhängigkeit der erfassten Eingaben ermittelt wird.

11. Vorrichtung nach einem der Ansprüche 8 bis 10, **dadurch gekennzeichnet, dass** der weitere Transponder (150) Türfreigabeanforderungsdaten enthält, die von dem Freigabesensor (44; 152) als Türfreigabeanforderung detektiert werden.

12. Vorrichtung nach einem der Ansprüche 8 bis 11, **dadurch gekennzeichnet, dass** der weitere Transponder (150) Sonderbetriebsartdaten enthält, die einen von mehreren untereinander unterschiedlichen Sonderbetriebszuständen repräsentieren.

13. Vorrichtung nach einem der Ansprüche 8 bis 12, **dadurch gekennzeichnet, dass** der weitere Transponder (150) Abschaltdaten enthält, die einen abgeschalteten Zustand des Teils der Anlage repräsentieren.

14. Vorrichtung nach einem der Ansprüche 8 bis 13, **dadurch gekennzeichnet, dass** der weitere Transponder (150) Identifikationsdaten enthält, die von dem Freigabesensor (152) detektiert werden, wobei die detektierten Identifikationsdaten in einer Speichereinheit (156) abgelegt werden, und wobei die Identifikationsdaten bei einem erneuten Detektieren aus der Speichereinheit (156) gelöscht werden.

15. Vorrichtung nach Anspruch 14, **dadurch gekennzeichnet, dass** der Sicherheitsschalter (16) eine Anzeigeeinheit auf, mit der unter Verwendung der gespeicherten Identifikationsdaten angezeigt wird, ob und/oder wie viele Personen sich in dem Gefahrenbereich aufhalten.

16. Vorrichtung nach einem der Ansprüche 1 bis 15, **dadurch gekennzeichnet, dass** das Rahmenteil (18) einen Not-Aus-Taster (57) aufweist.

17. Vorrichtung nach einem der Ansprüche 1 bis 16, **dadurch gekennzeichnet, dass** der Sicherheitsschalter (16) ein Entriegelungselement (70) aufweist, das im Bereich des Rahmenteils (18) angebracht ist und über eine Entriegelungsstange (72) mit dem Rahmenteil (18) in Wirkverbindung steht, wobei eine Person, die versehentlich in der Anlage (12) eingeschlossen wurde, die Schutztür (14) mit dem Entriegelungselement (70) mechanisch entriegeln kann.

18. Vorrichtung nach einem der Ansprüche 1 bis 17, **dadurch gekennzeichnet, dass** die Türfreigabeeinheit (130) in dem Rahmenteil (18) untergebracht ist.

## Claims

1. An apparatus comprising a safety switching device (26; 136) and a safety switch for generating a system enable signal depending on the position of a movable guard door (14) which is used to safeguard a hazardous area of a system (12), wherein the safety switching device (26; 136) drives the safety switch (16) and evaluates output signals from the safety switch (16) and shuts down an electrical load in the system (12) in dependence thereon, wherein at least one part of the system located in the hazardous area can be operated when the system enable signal is present, the safety switch comprising a door part (17) to be fastened to the movable guard door (14) and a frame part (18) to be fastened to a mating door piece (42), the safety switch comprising a bolt (56) moveable between a first position and a second position, a recess (100) in which the bolt (56) can engage in the second position, a locking element (104) designed to block the bolt (56) in the second position, an actuator (118) designed to influence the position of the locking element (104) relative to the bolt (56), and a first position sensor (114) designed to clearly detect at least one of the positions of the bolt (56) in order to generate the system enable signal in dependence thereon, and wherein the safety switching device (26; 136) comprises an evaluation unit (158) that can generate a drive signal for the actuator (118) depending on variables supplied to it,
**characterized in that** the safety switch (16) further comprises an electrically operating door release unit (130) which makes it possible to directly request a door release on the safety switch (16) and which can assume a locked state and an unlocked state, wherein blocking of the bolt (56) by the locking element (104) in the second position is allowed or maintained in the locked state, and blocking of the bolt (56) by the locking element (104) in the second position is not allowed or is canceled in the unlocked state, wherein the door release unit (130) supplies a release request signal to the evaluation unit (158) in the unlocked state, wherein, when the release request signal is present, the evaluation unit (158) can generate a drive signal which is used to drive the actuator (118) in such a manner that the blocking of the bolt (56) is canceled in the second position.

2. The apparatus as claimed in claim 1, **characterized in that** the door part (17) comprises the bolt (56) and the frame part (18) comprises the recess (100).

3. The apparatus as claimed in one of the preceding claims, **characterized in that** the first position sensor (114) is designed to detect the second position of the bolt (56) in a failsafe manner.

4. The apparatus as claimed in one of the preceding claims, **characterized in that** the first position sensor (114) is arranged on the frame part (18), preferably in the region of the recess (100).

5. The apparatus as claimed in one of the preceding claims, **characterized in that** the first position sensor (114) is designed to read a transponder (112), and the bolt (56) comprises a first transponder (112) which is arranged in such a manner that it can be read by the position sensor (114) in one of the two positions.

6. The apparatus as claimed in one of the preceding claims, **characterized in that** the evaluation unit (158) generates the drive signal when a state variable, which is supplied to the evaluation unit (158) and represents the operating mode of the part of the system, indicates that the part of the system is in an operating mode which does not correspond to automatic operation in which an application program is executed.

7. The apparatus as claimed in one of the preceding claims, **characterized in that** the door release unit (130) comprises a release request sensor (44; 152) configured to detect a door release request, wherein the door release unit (130) assumes the unlocked state when the door release request is detected.

8. The apparatus as claimed in claim 7, **characterized in that** the release request sensor (44; 152) is designed to read a further transponder (150), wherein the further transponder (150) is arranged in a mobile door release request unit (148), wherein the door release request is detected when the further transponder (150) is in the vicinity of the release request sensor (44; 152).

9. The apparatus as claimed in claim 8, **characterized in that** the further Transponder (150) comprises identification data which are detected as a door release request by the release request sensor (44; 152).

10. The apparatus as claimed in claim 9, **characterized in that** the release unit (130) comprises a signal processing unit (134) and a plurality of input elements configured to detect inputs, wherein the detected inputs are supplied to the signal processing unit (134), wherein the door release request is determined in the signal processing unit (134) depending on the detected inputs.

11. The apparatus as claimed in one of claims 8 to 10, **characterized in that** the further transponder (150) comprises door release request data which are detected by the release request sensor (44; 152) as a door release request.

12. The apparatus as claimed in one of claims 8 to 11, **characterized in that** the further transponder (150) comprises special operating mode data which represent one of a plurality of different special operating modes.

13. The apparatus as claimed in one of claims 8 to 12, **characterized in that** the further transponder (150) comprises switch-off data which represent a switched-off state of the part of the system.

14. The apparatus as claimed in one of claims 8 to 13, **characterized in that** the further transponder (150) comprises identification data which are detected by the release request sensor (152), wherein the detected identification data are stored in a memory unit (156), and wherein the identification data are erased from the memory unit (156) when they are detected again.

15. The apparatus as claimed in claim 14, **characterized in that** the safety switch (16) comprises a display unit which is used to display whether and/or how many persons are in the hazardous area, using the stored identification data.

16. The apparatus as claimed in one of claims 1 to 15, **characterized in that** the frame part (18) comprises an emergency stop button (57).

17. The apparatus as claimed in one of claims 1 to 16, **characterized in that** the safety switch (16) comprises an unlocking element (70) which is arranged in in the region of the frame part (18) and which is operatively connected to the frame part (18) via an unlocking rod (72), wherein a person who has been inadvertently trapped in the system can use the unlocking element (70) to mechanically unlock the guard door (14).

18. The apparatus as claimed in one of claims 1 to 17, **characterized in that** the door release unit (130) is arranged on the frame part (18).

## Revendications

1. Dispositif comprenant un appareillage de commutation de sécurité (26; 136) et un contacteur de sécurité (16) destiné à générer un signal d'autorisation de marche d'équipement en fonction de la position d'une porte de protection (14) mobile qui sécurise l'accès à une zone de danger d'un équipement (12), l'appareillage de commutation de sécurité (26; 136) commandant le contacteur de sécurité (16) et interprétant les signaux de sortie du contacteur de sécurité (16) et, en fonction de ceux-ci, mettant hors circuit un consommateur électrique de l'équipement (12), au moins une partie de l'équipement (12) qui se trouve dans la zone de danger pouvant être mise en fonctionnement par le contacteur de sécurité (16) en présence du signal d'autorisation de marche d'équipement, le contacteur de sécurité (16) possédant une partie de porte (17) destinée à être fixée à la porte de protection (14) mobile et une partie de cadre (18) destinée à être fixée à un pendant de porte (42), comprenant en outre un élément d'actionnement (56) qui peut être manoeuvré entre une première et une deuxième position, une cavité (100) dans laquelle peut venir en prise l'élément d'actionnement (56) dans la deuxième position, un élément de blocage (104) qui est configuré pour bloquer l'élément d'actionnement (56) dans la deuxième position, un actionneur (118) qui est configuré pour influencer la position de l'élément de blocage (104) par rapport à l'élément d'actionnement (56), et un premier capteur de position (114) qui est configuré pour détecter de manière univoque au moins l'une des positions de l'élément d'actionnement (56) afin de générer le signal d'autorisation de marche d'équipement en fonction de celle-ci, et l'appareillage de commutation de sécurité (26; 136) possédant une unité d'interprétation (158) qui peut générer un signal d'excitation pour l'actionneur (118) en fonction des grandeurs qui lui sont acheminées,
**caractérisé en ce que** le contacteur de sécurité (16) possède en outre une unité de libération de porte (130) à fonctionnement électrique qui permet de demander une libération de la porte directement au niveau du contacteur de sécurité (16) et qui peut adopter un état de verrouillage et un état de déverrouillage, un blocage de l'élément d'actionnement (56) par l'élément de blocage (104) dans la deuxième position étant autorisé ou maintenu dans l'état de verrouillage et, dans l'état de déverrouillage, un blocage de l'élément d'actionnement (56) par l'élément de blocage (104) dans la deuxième position n'étant pas autorisé ou supprimé, l'unité de libération de porte (130) acheminant à l'unité d'interprétation (158) dans l'état de déverrouillage une grandeur de demande de libération, l'unité d'interprétation (158), en présence de la grandeur de demande de libération, pouvant générer un signal de commande de libération avec lequel l'actionneur (118) est commandé de telle sorte que le blocage de l'élément d'actionnement (56) dans la deuxième position est supprimé.

2. Dispositif selon la revendication 1, **caractérisé en ce que** la partie porte (17) possède l'élément d'actionnement (56) et la partie de cadre (18) la cavité (100).

3. Dispositif selon l'une des revendications précédentes, **caractérisé en ce que** le premier capteur de position (114) est configuré pour détecter sans erreur la deuxième position de l'élément d'actionnement (56).

4. Dispositif selon l'une des revendications précédentes, **caractérisé en ce que** le premier capteur de position (114) est disposé sur la partie de cadre (18), et ce de préférence dans la zone de la cavité (100).

5. Dispositif selon l'une des revendications précédentes, **caractérisé en ce que** le premier capteur de position (114) est configuré pour lire un transpondeur (112) et **en ce que** l'élément d'actionnement (56) contient un premier transpondeur (112) qui est disposé de telle sorte qu'il peut être lu par le capteur de position (114) dans l'une des deux positions.

6. Dispositif selon l'une des revendications précédentes, **caractérisé en ce que** l'unité d'interprétation (158) génère le signal de commande de libération lorsque l'une des grandeurs d'état acheminées à l'unité d'interprétation (158), laquelle représente le mode de fonctionnement de la partie de l'équipement (12), indique que la partie de l'équipement (12) se trouve dans un mode de fonctionnement qui ne correspond pas au fonctionnement automatique dans lequel un programme d'utilisateur est exécuté.

7. Dispositif selon l'une des revendications précédentes, **caractérisé en ce que** l'unité de libération de porte (130) comprend un capteur de libération (44; 152) avec lequel peut être détectée une demande de libération de porte, l'unité de libération de porte (130) adoptant l'état de déverrouillage en fonction d'une demande de libération de porte détectée.

8. Dispositif selon la revendication 7, **caractérisé en ce que** le capteur de libération (44; 152) est configuré pour lire un transpondeur supplémentaire (150), le transpondeur supplémentaire (150) étant disposé dans une unité de demande de libération de porte mobile (148), la demande de libération de porte étant détectée lorsque le transpondeur supplémentaire (150) se trouve dans la zone du capteur de libération (44; 152).

9. Dispositif selon la revendication 8, **caractérisé en ce que** le transpondeur supplémentaire (150) contient des données d'identification qui sont détectées par le capteur de libération (44; 152) en tant que demande de libération de porte.

10. Dispositif selon la revendication 9, **caractérisé en ce que** l'unité de libération de porte (130) comprend une unité de traitement de signal (134) et une pluralité d'éléments de saisie (48) qui permettent de collecter des saisies, les saisies collectées étant acheminées à l'unité de traitement de signal (134), la grandeur de demande de libération étant déterminée dans l'unité de traitement de signal (134) en fonction des saisies collectées.

11. Dispositif selon l'une des revendications 8 à 10, **caractérisé en ce que** le transpondeur supplémentaire (150) contient des données de demande de libération de porte qui sont détectées par le capteur de libération (44; 152) en tant que demande de libération de porte.

12. Dispositif selon l'une des revendications 8 à 11, **caractérisé en ce que** le transpondeur supplémentaire (150) contient des données de mode de fonctionnement spécial qui représentent un parmi plusieurs états de fonctionnement spécial mutuellement différents.

13. Dispositif selon l'une des revendications 8 à 12, **caractérisé en ce que** le transpondeur supplémentaire (150) contient des données de mise hors circuit qui représentent un état hors circuit de la partie de l'équipement.

14. Dispositif selon l'une des revendications 8 à 13, **caractérisé en ce que** le transpondeur supplémentaire (150) contient des données d'identification qui sont détectées par le capteur de libération (152), les données d'identification détectées étant stockées dans une unité de mémoire (156) et les données d'identification étant effacées de l'unité de mémoire (156) lors d'une nouvelle détection.

15. Dispositif selon la revendication 14, **caractérisé en ce que** le contacteur de sécurité (16) possède une unité d'indication avec laquelle est indiqué, en utilisant les données d'identification mémorisées, si des personnes et/ou combien de personnes se trouvent dans la zone de danger.

16. Dispositif selon l'une des revendications 1 à 15, **caractérisé en ce que** la partie de cadre (18) possède un poussoir d'arrêt d'urgence (57).

17. Dispositif selon l'une des revendications 1 à 16, **caractérisé en ce que** le contacteur de sécurité (16) possède un élément de déverrouillage (70) qui est monté dans la zone de la partie de cadre (18) et se trouve en liaison active avec la partie de cadre (18) par le biais d'une tige de déverrouillage (72), une personne qui aurait été enfermée par mégarde dans l'équipement (12) pouvant déverrouiller mécaniquement la porte de protection (14) avec l'élément de déverrouillage (70).

18. Dispositif selon l'une des revendications 1 à 17, **caractérisé en ce que** l'unité de libération de porte (130) est logée dans la partie de cadre (18).
